# FASCICULE DE BREVET EUROPEEN

(11) **EP 1 748 860 B1**
(45) Date de publication et mention de la délivrance du brevet: **29.07.2015**
(21) Numéro de dépôt: 05751607.2
(22) Date de dépôt: 04.04.2005
(51) Int. Cl.: B23K 1/00

(54) **PROCÉDÉ D'ASSEMBLAGE D'UN TRICOT MÉTALLIQUE SUR UNE ENVELOPPE MÉTALLIQUE, SIÈGE DE CLAPET ET FILTRE D'ÉCHAPPEMENT OBTENUS PAR LA MISE NE EOUVRE DUDIT PROCÉDÉ**
VERFAHREN ZUM VERBINDEN EINES METALLISCHEN STRICKGEWEBES MIT EINEM METALBEHÄLTER, HERGESTELLTER VERSCHLUSSKÖRPER EINES SITZES UND FILTER ZUM ABGASREINIGUNG DAFÜR
ASSEMBLING METHOD OF A METALLIC KNITTING FABRIC WITH A METALLIC CASING, VALVE SEAT AND EXHAUST FILTER THEREBY

(30) Priorité: 22.04.2004 FR 0404291
(43) Date de publication de la demande: 07.02.2007
(73) Titulaire: Gervois, S.A., 80580 Pont Remy (FR)
(72) Inventeur: CAILLIERET, Gérard, F-51430 Bezannes (FR); RIQUIEZ, Pascal, F-80670 Bonneville (FR); ROUGNY, Sandrine, F-80000 Amiens (FR)
(74) Mandataire: Balesta, Pierre
(86) Numéro de dépôt international: PCT/FR2005/000816
(87) Numéro de publication internationale: WO 2005/110656

(56) Documents cités:
- FR-A- 2 735 836
- GB-A- 1 017 518
- US-A- 5 532 453
- US-B1- 6 298 935

## Description

L'invention concerne un procédé d'assemblage d'un tricot métallique, sur une enveloppe métallique; destinée à être parcourue par un gaz.

L'invention a également pour objet un siège de clapet de dispositif d'échappement obtenu par la mise en oeuvre du procédé d'assemblage.

Toutefois, bien que particulièrement prévu pour une telle application, le procédé d'assemblage pourra être utilisé pour la réalisation d'un filtre dans un dispositif d'échappement.

Le document US 5 532 453 décrit un procédé d'assemblage d'un ensemble de tôles métalliques ondulées sur une enveloppe et destiné à être parcouru par un gaz, dans lequel on réalise une étape de soudure à l'arc, au moyen d'un dispositif de soudure comportant deux électrodes.

Dans les dispositifs d'échappement, on connaît l'utilisation d'une pièce poreuse métallique et généralement un tricot métallique destiné à constituer un siège de clapet. Ce clapet est généralement ouvert ou fermé en fonction du flux de gaz traversant le tube d'échappement ou encore selon une variante auto-pilotée.

Ce tricot métallique a deux fonctions principales :
- il permet d'amortir le contact entre le clapet et l'enveloppe métallique du dispositif d'échappement constituée généralement au niveau de sa sortie par un tube et,
- il permet une diffusion contrôlée du gaz à travers lui grâce à sa structure poreuse.

Un des inconvénients de l'utilisation d'un tricot métallique est la difficulté d'assembler ledit tricot sur l'enveloppe.

Différentes solutions techniques ont été envisagées, parmi lesquelles une première solution qui consiste à disposer des pattes métalliques sur l'enveloppe et à fixer des plots en tricot pris dans ces pattes métalliques.

Cette solution permet un bon amortissement du clapet ; cela étant, les plots, n'étant pas répartis sur l'ensemble du contour de l'enveloppe, ne permettent pas le contrôle de la diffusion du gaz et présentent de plus des inconvénients au niveau de l'acoustique compte tenu du manque d'étanchéité entre l'enveloppe et le clapet.

Une autre solution technique consiste à venir souder point par point le tricot métallique sur l'enveloppe ou éventuellement sur le clapet.

Toutefois, cette solution présente également des inconvénients et notamment, la soudure qui est une soudure non homogène fait qu'il se forme des ondulations et des déformations entre le tricot et l'enveloppe ou le clapet nuisant à l'étanchéité et donc à l'acoustique de l'ensemble.

Ce défaut d'étanchéité empêche tout contrôle du gaz qui peut diffuser entre le tricot et l'enveloppe.

De plus, la soudure multipoints endommage le tricot métallique et notamment modifie localement la porosité de ce tricot, ce qui modifie la diffusion du gaz à travers ce dernier.

Les deux-solutions évoquées ci-dessus présentent de plus des problèmes importants de mise en oeuvre, notamment dans le cas d'enveloppe présentant un contour complexe.

La présente invention a pour but de pallier aux inconvénients précités et de proposer un procédé d'assemblage d'un tricot métallique, sur une enveloppe métallique, aisé à mettre en oeuvre et adapté au profil d'enveloppe métallique simple ou complexe.

Un autre objet de la présente invention est la réalisation d'un filtre d'échappement permettant de contrôler la diffusion et le traitement des gaz sortant de l'enveloppe métallique.

L'invention a ainsi pour objet un procédé d'assemblage d'un tricot métallique, sur une enveloppe métallique, destinée à être parcourue par un gaz, dans lequel on réalise une étape de soudure à l'arc, au moyen d'un dispositif de soudure comportant au moins deux électrodes disposées respectivement sur la pièce poreuse et sur l'enveloppe de manière à réaliser des micro-soudures à l'interface entre la pièce poreuse et l'enveloppe tout en permettant le contrôle de la diffusion du gaz à travers ladite pièce métallique poreuse après assemblage.

L'invention vise également un siège de clapet et un filtre d'échappement obtenus par la mise en oeuvre du procédé d'assemblage précité.

D'autres caractéristiques et avantages de l'invention apparaîtront plus clairement à la lecture de la description ci-après d'un exemple préféré de réalisation, dans lequel la description n'est donnée qu'à titre d'exemple non limitatif et en référence aux dessins annexés parmi lesquels :
- la figure 1 représente, en vue en perspective, un exemple de réalisation d'un siège de clapet conforme à l'invention,
- la figure 2 représente, de manière schématique, une vue en coupe du siège de clapet représenté à la figure 1 avec le dispositif de soudage conforme à l'invention,
- la figure 3 représente, en perspective, un exemple de réalisation du filtre d'échappement conforme à l'invention.

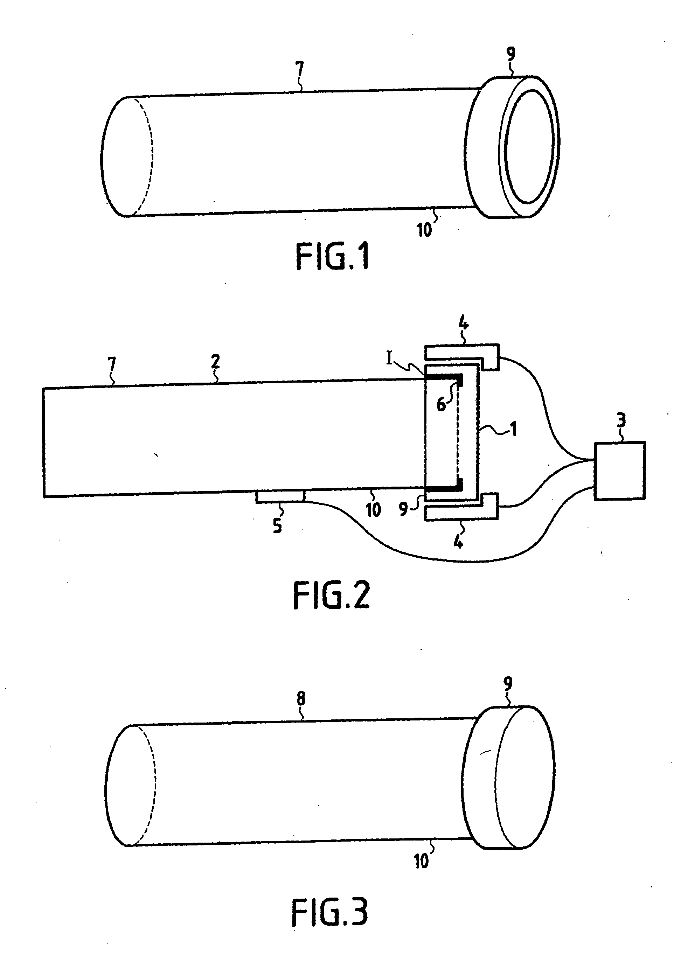

En se reportant principalement à la figure 2, on voit la réalisation de l'étape de soudure entre une pièce métallique poreuse 1 et une enveloppe métallique 2.

Cette pièce métallique poreuse 1 est un tricot métallique d'une porosité comprise entre 70 et 85 %.

De manière avantageuse, on utilisera un tricot métallique 9 ayant subi une étape préalable de compression. Le tricot 9 pourra être réalisé dans un autre matériau conducteur et, par exemple, en inox en titane ou en aluminium.

Pour réaliser la soudure, la pièce poreuse 1 est une pièce métallique ; toutefois, en fonction des applications, il pourra être envisagé de mélanger ces matériaux métalliques à d'autres matériaux et notamment imprégner le tricot d'un matériau catalytique.

On pourra également en fonction de l'application ajouter des éléments non conducteur du type végétal et par exemple du coton, du type synthétique et par exemple du polypropylène ou encore du type minéral et par exemple des céramiques.

L'enveloppe métallique 2 est destinée à être parcourue par un gaz ; il s'agit de préférence d'une pièce non poreuse.

Dans les exemples des figures 1 à 3, l'extrémité de ladite enveloppe métallique 2 est constituée d'un tube ou d'une coupelle 10 ; toutefois, bien entendu, en fonction des applications, différentes formes seront envisageables, et notamment présentant des profils complexes.

Selon une variante avantageuse de l'invention, afin d'améliorer la résistance de la soudure, on pourra réaliser préalablement au niveau de l'interface entre ladite enveloppe 2 et ladite pièce métallique poreuse 1, sur l'enveloppe 2, un usinage permettant d'augmenter la résistance de la soudure.

Cet usinage peut consister à réaliser des stries, de préférence, perpendiculaires à l'axe de l'enveloppe, lesdites stries étant suffisamment larges pour laisser entrer la matière du tricot métallique 9 afin d'augmenter la surface de l'interface I et accroître la résistance de la soudure. L'usinage pourra également consister en un abrasement de l'enveloppe 2 au niveau de l'interface I.

En se reportant une nouvelle fois à la figure 2, on voit la disposition du dispositif de soudure 3 et des électrodes 4 et 5.

Il a été constaté que, pour réaliser une soudure à l'arc homogène, il est avantageux d'utiliser une forme d'électrode pour l'électrode 4 disposée sur la pièce poreuse 1 correspondant à la forme de l'interface I entre la pièce métallique poreuse 1 et l'enveloppe 2.

Dans l'exemple de la figure 2, la pièce métallique poreuse 1 est constituée d'une bague présentant deux diamètres intérieurs de manière à constituer un rebord 6.

Ce rebord 6 permet, d'une part, d'augmenter la surface de l'interface I entre la pièce 1 et l'enveloppe 2 et permet, d'autre part, un calage de cette pièce 1 contre la face supérieure de l'extrémité de l'enveloppe 2.

On voit ainsi que les électrodes 4 ont une forme correspondant à l'interface I permettant d'optimiser le passage du courant afin de réaliser une soudure homogène.

II est à noter que l'on pourra envisager l'utilisation d'une seule ou de plusieurs électrodes 4 en fonction notamment de la géométrie des pièces à assembler.

Il est important de noter que les électrodes 4 comportent des pièces de contact avec la pièce métallique poreuse 1.

La soudure doit être dosée de manière à permettre une fusion locale au niveau de l'interface I sans toutefois endommager la structure de la pièce métallique poreuse 1.

De manière à faciliter la soudure, on utilisera une pièce métallique poreuse 1 constituée d'éléments, et notamment dans le cas d'un tricot métallique 9, de fils, dont l'orientation n'est pas parallèle au sens du flux du courant.

Selon un mode de réalisation préféré de l'invention, le dispositif de soudure délivre une tension comprise entre 7000 et 9000 V et un ampérage compris entre 35 et 45 kA.

Le condensateur du dispositif de soudure 3 a un temps de décharge compris entre 400 et 1000 µs.

Ce procédé permet ainsi de réaliser rapidement une structure constituée d'un ensemble de micro-soudures entre la pièce métallique 1 et l'enveloppe 2, quelles que soient les géométries de ces éléments.

En se reportant à la figure 1, on voit un siège de clapet 7 obtenu par la mise en oeuvre du procédé d'assemblage précité entre un tricot métallique 9 et l'extrémité de l'enveloppe 2 ou coupelle 10.

Le tricot métallique 9 est en forme de bague, ladite bague pouvant être de diamètre intérieur constant ou avoir deux diamètres intérieurs permettant de réaliser un rebord.

Ainsi constitué, le siège de clapet 7 présente un ensemble de caractéristiques combinées que l'on ne retrouve pas dans l'état de la technique à savoir une résistance importante à l'arrachement, une bonne étanchéité, un contrôle de la diffusion du gaz à travers la pièce métallique poreuse 1 et une amélioration de l'acoustique.

Bien que particulièrement adapté à ce type de réalisation, le procédé pourra également être utilisé pour la réalisation d'un filtre 8 tel que représenté à la figure 3.

Ce filtre 8 est constitué par l'assemblage entre un tricot métallique 9 et une enveloppe 2, le tricot métallique 9 présentant une forme permettant de recouvrir une extrémité de l'enveloppe 2 ou coupelle 10 et les gaz s'échappant par cette extrémité de l'enveloppe 2 sont filtrés par la surface dudit tricot métallique 9.

Dans cette application, il sera particulièrement intéressant d'imprégner le tricot métallique 9 d'un matériau catalytique.

## Revendications

1. Procédé d'assemblage d'un tricot métallique sur une enveloppe métallique (2), destinée à être parcourue par un gaz, dans lequel on réalise une étape de soudure à l'arc, au moyen d'un dispositif de soudure (3) comportant au moins deux électrodes (4,5) disposées respectivement sur le tricot métallique (1) et sur l'enveloppe (2) de manière à réaliser des micro-soudures à l'interface (I) entre le tricot métallique (1) et l'enveloppe (2) tout en permettant le contrôle de la diffusion du gaz à travers le tricot métallique (1) après assemblage.

2. Procédé d'assemblage selon la revendication 1, dans lequel on réalise préalablement une étape d'usinage de l'enveloppe (2) de manière à augmenter la résistance de la soudure.

3. Procédé d'assemblage selon la revendication 1 ou 2, dans lequel, lors de l'étape de soudure, le dispositif de soudure (3) délivre une tension comprise entre 7000 et 9000 V et un ampérage compris entre 35 et 45 kA.

4. Procédé d'assemblage selon la revendication 3, dans lequel le condensateur du dispositif de soudure (3) a un temps de décharge compris entre 400 et 1000 µs.

5. Procédé d'assemblage selon l'une quelconque des revendications 1 à 4, dans lequel la forme de l'électrode (4) disposée sur le tricot métallique (1) correspond à la forme de l'interface (I) entre le tricot métallique (1) et l'enveloppe (2).

6. Siège de clapet (7) de dispositif d'échappement obtenu par la mise en oeuvre du procédé d'assemblage selon l'une quelconque des revendications 1 à 5 entre un tricot métallique (9) et une enveloppe (2).

7. Siège de clapet (7) selon la revendication 6, dans lequel le tricot métallique (9) est en forme de bague et emmanché avant soudure à l'extrémité de l'enveloppe (2) constituée par une coupelle (10).

8. Filtre d'échappement (8) obtenu par la mise en oeuvre du procédé d'assemblage selon l'une quelconque des revendications 1 à 5 entre un tricot métallique (9) et une enveloppe (2).

9. Filtre d'échappement (8) selon la revendication 8, dans lequel le tricot métallique (9) a une forme couvrant l'extrémité de l'enveloppe (2).

10. Filtre d'échappement (8) selon la revendication 8 ou 9, dans lequel le tricot métallique (9) est imprégné d'un matériau catalytique.

## Patentansprüche

1. Verfahren zur Montage eines metallischen Gewebes auf einer metallischen Hülle (2), die dazu bestimmt ist, von einem Gas durchströmt zu werden, bei dem ein Schritt des Lichtbogenschweißens mit Hilfe einer Schweißvorrichtung (3) durchgeführt wird, die mindestens zwei Elektroden (4, 5) umfasst, die auf dem metallischen Gewebe (1) bzw. auf der Hülle (2) angeordnet sind, um Mikroschweißungen an der Schnittstelle (I) zwischen dem metallischen Gewebe (1) und der Hülle (2) durchzuführen, wobei die Kontrolle der Diffusion des Gases durch das metallische Gewebe (1) nach der Montage ermöglicht wird.

2. Montageverfahren nach Anspruch 1, bei dem vorher ein Schritt der Bearbeitung der Hülle (2) durchgeführt wird, um die Beständigkeit der Schweißung zu erhöhen.

3. Montageverfahren nach Anspruch 1 oder 2, bei dem während des Schweißschrittes die Schweißvorrichtung (3) eine Spannung zwischen 7000 und 9000 V und ein Amperewert zwischen 35 und 45 kA liefert.

4. Montageverfahren nach Anspruch 3, bei dem der Kondensator der Schweißvorrichtung (3) eine Entladezeit zwischen 400 und 1000 µs aufweist.

5. Montageverfahren nach einem der Ansprüche 1 bis 4, bei dem die Form der Elektrode (4), die auf dem metallischen Gewebe (1) angeordnet ist, der Form der Schnittstelle (I) zwischen dem metallischen Gewebe (1) und der Hülle (2) entspricht.

6. Ventilsitz (7) einer Auspuffvorrichtung, der durch den Einsatz des Montageverfahrens nach einem der Ansprüche 1 bis 5 zwischen einem metallischen Gewebe (9) und einer Hülle (2) erhalten wird.

7. Ventilsitz (7) nach Anspruch 6, bei dem das metallische Gewebe (9) ringförmig ist und vor dem Schweißen am Ende der Hülle (2), das von einer Schale (10) gebildet ist, eingesteckt wird.

8. Auspufffilter (8), der durch den Einsatz des Montageverfahrens nach einem der Ansprüche 1 bis 5 zwischen einem metallischen Gewebe (9) und einer Hülle (2) erhalten wird.

9. Auspufffilter (8) nach Anspruch 8, bei dem das metallische Gewebe (9) eine Form hat, die das Ende der Hülle (2) abdeckt.

10. Auspufffilter (8) nach Anspruch 8 oder 9, bei dem das metallische Gewebe (9) mit einem Katalysematerial imprägniert ist.

## Claims

1. A method for assembling a knitted metal fabric on a metal enclosure (2), designed to be traveled by a gas, in which an arc welding step is carried out, using a welding device (3) including at least two electrodes (4, 5) positioned on the knitted metal material (1) and on the enclosure (2), respectively, so as to produce micro-welds at the interface (I) between the knitted metal fabric (1) and the enclosure (2) while making it possible to monitor the diffusion of gas through the knitted metal fabric (1) after assembly.

2. The assembly method according to claim 1, wherein a prior step is carried out for machining the enclosure (2) so as to increase the strength of the weld.

3. The assembly method according to claim 1 or 2, wherein, during the welding step, the welding device (3) delivers a voltage comprised between 7,000 and 9,000 V and an amperage comprised between 35 and 45 kA.

4. The assembly method according to claim 3, wherein the condenser of the welding device (3) has a discharge time comprised between 400 and 1,000 µs.

5. The assembly method according to any one of claims 1 to 4, wherein the shape of the electrode (4) positioned on the knitted metal fabric (1) corresponds to the shape of the interface (I) between the knitted metal fabric (1) and the enclosure (2).

6. A valve seat (7) of an exhaust device obtained by implementing the assembly method according to any one of claims 1 to 5 between a knitted metal fabric (9) and an enclosure (2).

7. The valve seat (7) according to claim 6, wherein the knitted metal fabric (9) is in the form of a ring and fitted before welding to the end of the enclosure (2) made up of a cup (10).

8. An exhaust filter (8) obtained by implementing the assembly method according to any one of claims 1 to 5 between a knitted metal fabric (9) and an enclosure (2).

9. The exhaust filter (8) according to claim 8, wherein the knitted metal fabric (9) has a shape covering the end of the enclosure (2).

10. The exhaust filter (8) according to claim 8 or 9, wherein the knitted metal fabric (9) is impregnated with a catalytic material.
